# EUROPÄISCHE PATENTANMELDUNG

(11) **EP 3 118 768 A1**
(43) Veröffentlichungstag der Anmeldung: **18.01.2017**
(21) Anmeldenummer: 16401045.6
(22) Anmeldetag: 15.07.2016
(51) Int. Cl.: G06F 21/53

(54) **VERFAHREN ZUR BILDUNG EINER VIRTUELLEN UMGEBUNG IN EINEM BETRIEBSSYSTEM EINES COMPUTERS**

(30) Priorität: 17.07.2015 DE 102015111625
(71) Anmelder: Backes SRT GmbH, 66123 Saarbrücken (DE)
(72) Erfinder: von Styp-Rekowsky, Philipp, 66119 Saarbrücken (DE)
(74) Vertreter: Patentanwälte Bernhardt / Wolff Partnerschaft

(57) **Zusammenfassung**

Die Erfindung betrifft ein Verfahren zur Bildung einer virtuellen Umgebung in einem Betriebssystem (2) eines Computers (1), insbesondere in dem Betriebssystem "Android", wobei das Betriebssystem (2) dazu vorgesehen ist, für jede unter dem Betriebssystem (2) ausgeführte Anwendungssoftware (A1,A2,A3) einen abgetrennten Bereich anzulegen, der von den jeweiligen Bereichen für andere Anwendungssoftware (A1,A2,A3) isoliert ist. Erfindungsgemäß wird die virtuelle Umgebung durch ein Virtualisierungsprogramm (V) gebildet wird, das in einem der abgetrennten Bereiche des Betriebssystems (2) ausgeführt wird, und in dem Virtualisierungsprogramm (V) ein Anwendungsprogramm (A4,A5) teilweise oder vollständig isoliert von dem Betriebssystem (2) ausgeführt wird.

## Beschreibung

Die Erfindung betrifft ein Verfahren zur Bildung einer virtuellen Umgebung in einem Betriebssystem eines Computers, insbesondere in dem Betriebssystem "Android", wobei das Betriebssystem dazu vorgesehen ist, für jede unter dem Betriebssystem ausführbare Anwendungssoftware einen abgetrennten Bereich anzulegen, der von den jeweiligen Bereichen für andere Anwendungssoftware isoliert ist.
Die Erfindung betrifft ferner ein Computerprogrammprodukt, das direkt in einen internen Speicher eines digitalen Computers geladen werden kann und Softwareabschnitte umfasst, mit denen die Schritte des Verfahrens ausgeführt werden, wenn das Computerprogrammprodukt auf einem Computer läuft, sowie eine Vorrichtung zur Datenverarbeitung, die Mittel zur Ausführung des Verfahrens umfasst.

Das Betriebssystem "Android" ist ein Betriebssystem für mobile Geräte wie Smartphones, Mobiltelefone, Tablet-Computer und dergleichen, das einen Linux-Kernel aufweist, der für Speicher- und Prozessverwaltung zuständig ist, eine Schnittstelle zur Netzwerkkommunikation und zur Wiedergabe von Multimedia und der Netzwerkkommunikation sowie eine Hardware-Abstraktionsschicht für Software und Gerätetreiber für das Betriebssystem bildet.
Während bei herkömmlichen Desktop-Betriebssystemen wie Microsoft Windows, Linux o. dgl. ein gemeinsamer Datenbereich gebildet wird, in dem verschiedene Anwendungssoftware gespeichert und ausgeführt und in dem Kommunikation mit dem Betriebssystem abhängig von den jeweiligen Rechten eines Nutzers geregelt wird, werden bei dem Betriebssystem "Android" für jede Anwendungssoftware eigene abgetrennte Bereiche gebildet, in denen Daten und Code-Ausführung von anderer Anwendungssoftware isoliert sind. Das Betriebssystem "Android" weist dazu jeder Anwendungssoftware bei der Installation eine einzigartige Benutzeridentität (User identity, UID) zu, auf welcher basierend Komponenten des Betriebssystems eine Zugangskontrolle für die jeweilige Anwendungssoftware durchführen, und unter der sie in dem Betriebssystem kommunizieren kann. Der Anwendungssoftware werden in dem Betriebssystem Zugriffs- und/oder Handlungsrechte zugewiesen, die mittels eines Linux Kernels des Betriebssystems geprüft werden. Ferner sind Daten der Anwendungssoftware in der Regel lediglich für die Anwendung selbst lesbar. Um einen Zugriff auf die Daten durch eine andere Anwendungssoftware zu ermöglichen, muss diese dazu gezielt eingerichtet werden. In dem Betriebssystem "Android" ist dafür ein Zugriffsmechanismus vorgesehen, auf den die jeweilige Anwendungssoftware bei entsprechender Einrichtung zugreifen kann.
Deshalb ergeben sich für die Erstellung von Software, mit der Schadprogramme wie Computerviren im Betriebssystem "Android" aufgefunden, blockiert, isoliert und beseitigt werden können, gewisse Schwierigkeiten.
Die herkömmlichen Virenscanner für die Desktopbetriebssysteme können ihre Funktionen u.a. dadurch erfüllen, dass sie zur Überwachung, normalerweise ausgestattet mit Administrator-Rechten, direkt auf Informationen aus dem Desktopbetriebssystem zugreifen und das Desktopbetriebssystem direkt manipulieren, um Handlungen der Schadprogramme zu unterbinden. Mangels des gemeinsamen Datenbereichs für die Anwendungssoftware im Betriebssystem "Android" können die Virenscanner aber nicht in gleicher Weise ausgelegt werden wie für die Desktopbetriebssysteme.

Zwar sind Virenscanner für das Betriebssystem "Android" verfügbar. Diese können allerdings lediglich die Installationen von Anwendungssoftware erkennen und melden, nicht jedoch Handlungen von bereits installierter Anwendungssoftware regeln.
Bei einem durch Benutzung bekannten Verfahren zur Verbesserung der Sicherheit des Betriebssystems "Android" wird die Anwendungssoftware bei ihrer Installation durch Hinzufügung von Programmcode modifiziert, um ihre Kommunikation besser kontrollieren zu können. Daraus ergibt sich allerdings oftmals das Problem, dass die Anwendungssoftware schlechter oder nur in begrenztem Umfang funktioniert.

Bei weiteren, durch Benutzung bekannten Methoden wird das Betriebssystem selbst modifiziert ("Rooten" bei Android, "jail-break" bei iOS). Eine Modifizierung des Betriebssystem erfordert allerdings gewisse Kenntnisse und kann von einem ungeschulten Benutzer nicht ohne Weiteres durchgeführt werden. Darüber hinaus können sich rechtliche Probleme ergeben, bspw. betreffend Gewährleistung, die ein Hersteller eines mit dem Betriebssystem versehenen Geräts bietet.

Der Erfindung liegt die Aufgabe zugrunde, ein Verfahren der eingangs genannten Art zu schaffen, mit dem sich bei einfacher Handhabung die Sicherheit des Betriebssystems gegen unerwünschte Handlungen durch das Anwendungsprogramm erhöhen lässt.

Erfindungsgemäß wird diese Aufgabe dadurch gelöst, dass die virtuelle Umgebung durch ein Virtualisierungsprogramm gebildet wird, das in einem der abgetrennten Bereiche des Betriebssystems ausführbar ist und in dem ein Anwendungsprogramm teilweise oder vollständig isoliert von dem Betriebssystem ausgeführt wird.

Bezüglich des Computerprogrammprodukts wird die Aufgabe dadurch gelöst, dass die virtuelle Umgebung durch ein Virtualisierungsprogramm gebildet ist, das dazu vorgesehen ist, in einem der abgetrennten Bereiche des Betriebssystems ausgeführt zu werden, und derart eingerichtet ist, dass in ihm ein Anwendungsprogramm teilweise oder vollständig isoliert von dem Betriebssystem ausgeführt werden kann.

Durch die Erfindung kann ein unmittelbarer Zugriff des Anwendungsprogramms auf das Betriebssystem vermieden werden. Es wird die Möglichkeit geschaffen, durch das Virtualisierungsprogramm das Anwendungsprogramm, insbesondere seinen Zugriff auf Informationen und seine Kommunikation, zu überwachen und zu regeln. Dazu bildet das Virtualisierungsprogramm zweckmäßigerweise eine Kontrollschnittstelle zwischen dem Anwendungsprogramm und dem Betriebssystem.
Um sicherzustellen, dass das Anwendungsprogramm nicht unkontrolliert agieren kann, ist das Virtualisierungsprogramm so ausgebildet, dass eine Kommunikation des Anwendungsprogramms mit dem Betriebssystem ausschließlich über das Virtualisierungsprogramm erfolgen kann. Zweckmäßigerweise kann das Anwendungsprogramm in dem Virtualisierungsprogramm ohne jeglichen unmittelbaren Zugriff auf den Kernel des Betriebssystems, insbesondere ohne Zugang zur Middleware des Betriebssystems und ohne Fähigkeit zur Durchführungen von bleibenden Änderungen im Dateisystem, ablaufen.
Unerwünschte Handlungen wie Weitergabe von Informationen oder die Verbreitung von Viren durch das Anwendungsprogramm lassen sich dadurch unterbinden. Da die Anwendungsprogramme, insbesondere unter dem Betriebssystem "Android", eng in die Middleware des Betriebssystems, z.B. zum Lifecycle-Management oder zur Inter-Komponentenkommunikation eingebunden sind, kann das Virtualisierungsprogramm die ablaufende Kommunikation graduell und in kontrollierter Art und Weise erlauben, um das isolierte Anwendungsprogramm in Verbindung mit dem Betriebssystem zu bringen.

Das Virtualisierungsprogramm ist zweckmäßigerweise derart gebildet, dass es in gleicher Weise wie herkömmliche Anwendungssoftware in dem Betriebssystem installierbar und ausführbar ist. Bei Installation erhält es vorzugsweise eine Benutzeridentität (user identity, UID), unter der es in dem Betriebssystem kommunizieren kann, der im Betriebssystem Handlungs- und/oder Datenzugriffsrechte zugewiesen werden und unter der Daten gespeichert werden.
Die durch das Virtualisierungsprogramm gebildete virtuelle Umgebung ist in der bevorzugten Ausführungsform der Erfindung derart ausgebildet, dass sich das Anwendungsprogramm darin in gleicher Weise installieren und handhaben lässt, als wäre es unmittelbar in dem Betriebssystem angelegt.
Vorteilhaft muss zur Bildung der virtuellen Umgebung weder das Betriebssystem noch das Anwendungsprogramm geändert werden, sodass es sich in gleicher Weise wie herkömmliche Anwendungsprogramme installieren und benutzen lässt. Besondere Kenntnisse sind zur Installation des Anwendungsprogramms und dessen Handhabung nicht erforderlich.

In einer bevorzugten Ausführungsform der Erfindung ist das Virtualisierungsprogramm derart vorgesehen, dass in Ihm gleichzeitig unterschiedliche Anwendungsprogramme ausgeführt und kontrolliert werden können, sodass in dem Betriebssystem für die Anwendungsprogramme ein isolierter und gesicherter Bereich geschaffen werden kann. Jedes der Anwendungsprogramme erhält eine eigene Benutzeridentität (UID), über welche das Virtualisierungsprogramm die jeweilige Kommunikation zuordnen kann. Das Virtualisierungsprogramm kommuniziert mit dem Betriebssystem allerdings nur unter seiner eigenen Benutzeridentität.

Darüber hinaus können zwei oder mehrere der Virtualisierungsprogramme in dem Betriebssystem vorgesehen werden und ggf. gleichzeitig ausgeführt werden, um auf dem jeweiligen mit Betriebssystem versehenen Computer voneinander getrennte Anwendungsprogrammbereiche, z.B. zur Bildung eines Geschäfts- und eines Privatbereichs, zu schaffen.

Zweckmäßigerweise ist das Virtualisierungsprogramm derart vorgesehen, dass nach jeweiliger Neuinstallation eines hinzugefügten Anwendungsprogramms unter dem Virtualisierungsprogramm Kommunikation oder zumindest Teile der Kommunikation des hinzugefügten Anwendungsprogramms mit dem Betriebssystem blockiert wird bzw. werden.
Vorzugsweise ist vorgesehen, dass das Virtualisierungsprogramm die Kommunikation jedes Anwendungsprogramms selektiv für bestimmte Funktionen oder Funktionsbereiche zulassen kann, wobei die Funktionen bzw. Funktionsbereiche nach jeweilig benötigten Datenzugriffen vorab zugeordnet sein können. Dazu ist für das Virtualisierungsprogramm vorzugsweise eine grafische Benutzeroberfläche (GUI) vorgesehen, die eine Möglichkeit zur Einstellung von Rechten des Anwendungsprogramms zur Kommunikation für die Funktionen bzw. die Funktionsbereiche vorsieht.

In einer Ausgestaltung der Erfindung ist das Virtualisierungsprogramm dazu eingerichtet, für jedes in ihm ablaufende Anwendungsprogramm eine eigene Umgebungseinrichtung vorzusehen, die gegenüber dem Anwendungsprogramm eine herkömmlicherweise durch das Betriebssystem für das Anwendungsprogramm bereitgestellte Anwendungsumgebung bildet, wobei in der Umgebungseinrichtung das Anwendungsprogramm vorzugsweise dynamisch geladen und ausgeführt werden kann.

Zweckmäßigerweise weist das Virtualisierungsprogramm ferner eine Regelungseinrichtung auf, die dazu vorgesehen ist, einen Eingabe/Ausgabe-Betrieb zu überwachen und abhängig von der jeweiligen Einstellung der Kommunikationsrechte zu regeln, insbesondere zuzulassen oder zu blockieren. Der Eingabe/Ausgabe-Betrieb kann einen Systemaufruf (Syscall), z.B. um auf das Dateisystem, Network Sockets, Bluetooth und andere low-level Ressourcen zuzugreifen, oder einen Zugriff auf ein Verbindungsmodul eines Kernelmoduls des Betriebssystems, z.B. dem Bindermodul des Linux Kernels des Betriebssystems "Android", zu erlangen, umfassen, beispielsweise um mit der Middleware des Betriebssystems zu kommunizieren.

In einer besonders bevorzugten Ausführungsform der Erfindung bildet die Umgebungseinrichtung einen im Betriebssystem "Android" zur Verwendung bereitgestellten isolierten Prozess ("isolated process"). Dieser Prozess ist unter dem Betriebssystem "Android" vorgesehen worden, damit Programmentwickler bestimmte Komponenten eines Anwendungsprogramms isoliert vom Rest des Betriebssystems ablaufen lassen können, um den Komponenten lediglich eingeschränkte oder keine Zugriffs- oder Handlungsrechte zuzuweisen. Dadurch kann vermieden werden, dass bei Verarbeitung von Inhalten unvertrauter Quellen Sicherheitslücken ausgenutzt werden können. Gemäß der Erfindung wird der isolierte Prozess vorzugsweise zur Aufnahme eines vollständigen Anwendungsprogramms verwendet.

Das Virtualisierungsprogramm stellt zur Aufnahme jedes Anwendungsprogramms, das unter ihm ablaufen soll, ferner eine Schnittstelle zur interprozessualen Kommunikation ("IPC Interface") bereit, über welche die Umgebungseinrichtung und die Regelungseinrichtung kommunizieren können. Die Regelungseinrichtung kann über das IPC Interface die Umgebungseinrichtung mittels einer Vorbereitungsfunktion ("prepare") und einer Beendigungsfunktion ("terminate") vorzugsweise initialisieren und beenden.

Das Virtualisierungsprogramm bildet zweckmäßigerweise ferner eine Einrichtung zum Empfang und zur Weiterleitung von Kommunikation zwischen dem Anwendungsprogramm und der Middleware des Betriebssystems. Die Einrichtung ändert die Kommunikation so, dass sie nicht direkt zu dem Verbindungsmodul des Kernels, sondern zur Regelungseinrichtung versandt wird, wobei vorzugsweise Handles zur Kommunikation mit dem Verbindungsmodul überschrieben werden.

Das Virtualisierungsprogramm umfasst ferner eine Einrichtung zum Empfang und zur Weiterleitung des Systemaufrufs, der von dem in der Umgebungseinrichtung ablaufenden Anwendungsprogramm ausgeht. Die Empfangs- und Weiterleitungseinrichtung ist dazu vorgesehen, den Systemaufruf, der ursprünglich an das Betriebssystem gerichtet ist, an die Regelungseinrichtung umzuleiten, wobei der Systemaufruf vorzugsweise derart geändert wird, dass anstatt der an sich zum Abruf vorgesehenen Funktion des Betriebssystems eine Funktion der Regelungseinrichtung aufgerufen wird. Umgekehrt ist die Empfangs- und Weiterleitungseinrichtung auch vorgesehen derart, eine von der Regelungseinrichtung auf den Systemaufruf zurückgegebene Antwort an die Umgebungseinrichtung und damit das Anwendungsprogramm weiterzugeben.

Die Regelungseinrichtung ist in der bevorzugten Ausführungsform der Erfindung dazu vorgesehen, den Eingabe/Ausgabe-Betrieb für unterschiedliche Funktionen des Anwendungsprogramms separat zu regeln, wobei die Funktionen, vorzugsweise einzeln und/oder in Gruppen, auswählbar sind.

In einer Ausgestaltung der Erfindung weist die Regelungseinrichtung eine erste Schicht auf, die dazu vorgesehen ist, den Systemaufruf sowie die Kommunikation zum Verbindungsmodul bzw. der Middleware von der Umgebungseinrichtung bzw. den Empfangs- und Weiterleitungseinrichtungen zu empfangen und semantisch anzupassen und zu einer zweiten Schicht zu übermitteln, in der geprüft wird, ob der Systemaufruf bzw. die Kommunikation zulässig ist und dementsprechend weitergeleitet oder blockiert wird. In Fällen, in denen der Systemaufruf oder die Kommunikation blockiert wird, erzeugt die zweite Schicht zu dem jeweiligen Systemaufruf bzw. zur Kommunikation passende Antworten, mit denen das Anwendungsprogramm weiterarbeiten kann. Darüber hinaus wird Kommunikation, die sich an ein anderes unter dem Virtualisierungsprogramm ablaufendes Anwendungsprogramm richtet, ohne Zugriff auf das Betriebssystem verarbeitet, indem das Virtualisierungsprogramm dazu veranlasst wird, selbst auf jeweilig benötigte Information zuzugreifen bzw. angeforderte Handlungen auszuführen oder zu veranlassen. Die Kommunikation zu dem letztgenannten anderen Anwendungsprogramm kann durch das Betriebssystem nicht durchgeführt werden, da es unter dem Virtualisierungsprogramm abläuft und deshalb dem Betriebssystem nicht bekannt ist.
Eine dritte Schicht der Regelungseinrichtung ist zweckmäßigerweise dazu vorgesehen, die von dem Anwendungsprogramm ausgehende Kommunikation gegenüber dem Betriebssystem als Kommunikation des Virtualisierungsprogramms erscheinen zu lassen und umgekehrt von dem Betriebssystem an das Anwendungsprogramm gerichtete Kommunikation, sofern mehrere Anwendungsprogramme unter dem Virtualisierungsprogramm ablaufen, dem jeweiligen Anwendungsprogramm zuzuordnen. Dazu werden vorzugsweise Identifikatoren von Komponenten des Anwendungsprogramms durch Komponenten des Virtualisierungsprogramms ersetzt.

In einer weiteren Ausgestaltung der Erfindung ist in dem Virtualisierungsprogramm zumindest ein Standardprogramm, das üblicherweise in dem Betriebssystem vorgesehen ist und beispielsweise ein Kontaktdatenprogramm, ein Kalenderprogramm, ein Kameraprogramm, ein SMS-Programm oder ein Telefonprogramm sein kann, als Anwendungsprogramm vorinstalliert. Die Regelungseinrichtung kann, sofern eines der Anwendungsprogramme versucht, über das Betriebssystem auf das Standardprogramm zuzugreifen, die entsprechende Kommunikation zu dem unter dem Virtualisierungsprogramm vorgesehenen Standardprogramm umleiten. Ein unkontrollierter Zugriff auf das über das Betriebssystem erreichbare Standardprogramm kann so vermieden werden.
Alternativ oder ergänzend dazu kann das Virtualisierungsprogramm dazu vorgesehen sein, das genannte Standardprogramm in dem Virtualisierungsprogramm auszuführen und derart einzurichten, dass für das Standardprogramm, wenn es unter dem Virtualisierungsprogramm abläuft, eine eigene Datenbank gebildet wird, die sich von derjenigen unterscheidet, auf die das Standardprogramm zugreift, wenn es unter dem Betriebssystem läuft. Wenn das Anwendungsprogramm auf das unter dem Betriebssystem erreichbare Standardprogramm zuzugreifen, wird es durch die Regelungseinrichtung zu dem unter dem Virtualisierungsprogramm ablaufenden Standardprogramm geleitet und hat somit lediglich auf die unter dem Virtualisierungsprogramm vorgesehene Datenbank Zugriff. Das Virtualisierungsprogramm ist zweckmäßigerweise derart eingerichtet, dass das Standardprogramm gleichzeitig unter dem Betriebssystem und unter dem Virtualisierungsprogramm ablaufen kann.

Die Erfindung wird nachfolgend anhand eines Ausführungsbeispiels und den beiliegenden Zeichnungen, die sich auf das Ausführungsbeispiel beziehen, näher erläutert. Es zeigen schematisch:
- Fig. 1: eine Vorrichtung nach dem Stand der Technik,
- Fig. 2: eine erfindungsgemäße Vorrichtung, und
- Fig. 3: Details der Vorrichtung nach Fig. 2.

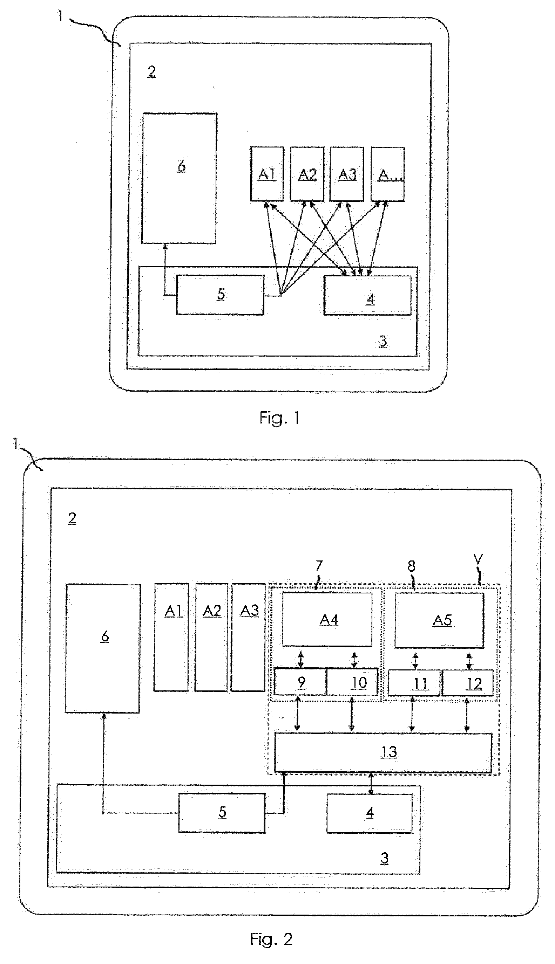

In Fig. 1 ist ein Computer 1, beispielsweise ein Smartphone, gezeigt, das in bekannter Weise mit dem eingangs beschriebenen Betriebssystem 2 "Android" betrieben wird. Das Betriebssystem 2 umfasst einen Linux Kernel 3, der eine Einrichtung 4 zur Durchführung von Systemaufrufen ("Syscalls") und ein Verbindungsmodul 5 ("Bindermodul") zur Durchführung von Kommunikation mit einer Middleware 6 aufweist, die über eine Einrichtung zur Kommunikation zwischen Anwendungen ("Inter-Process-Communication", kurz IPC) kommuniziert. Unter dem Betriebssystem 2 laufen mehrere Anwendungsprogramme A1,A2,A3 ab, wobei in dem Betriebssystem 2 für jedes der Anwendungsprogramme A1,A2,A3 voneinander getrennte Umgebungen gebildet sind, in denen die jeweiligen Daten der Anwendungsprogramme A1,A2,A3 sowie die Durchführung des Programmcodes der Anwendungsprogramme A1,A2,A3 voneinander isoliert sind. Das Betriebssystem 2 vergibt jedem der Anwendungsprogramme A1,A2,A3 bei der Installation eine einzigartige Benutzeridentität (UID), auf der basierend dem jeweiligen Anwendungsprogramm A1,A2,A3 in dem Betriebssystem 2 Zugriffs- und Handlungsrechte gehandhabt werden und insbesondere auch Daten gespeichert werden. Der Kernel 3 führt für die Systemaufrufe dazu eine Zugangskontrolle, insbesondere Discretionary Access Control (DAC) sowie Mandatory Access Control (MAC), durch. Zugriffe durch das Verbindungsmodul 5 auf die Middleware 6 werden mittels einer Monitoreinrichtung überwacht, die der jeweiligen Benutzeridentität ergebenen Zugriffs- und Handlungsrechte prüft und durchsetzt.

Nachfolgend wird das erfindungsgemäße Verfahren anhand der Fig. 2 erläutert.

Unter dem Betriebssystem ("Android") 2 ist ein erfindungsgemäßes Virtualisierungsprogramm V installiert, das von dem Betriebssystem 2 wie eines der herkömmlichen Anwendungsprogramme A1,A2,A3 behandelt wird und für das dementsprechend im Betriebssystem 2 eine der genannten getrennten Umgebungen gebildet ist. Das Virtualisierungsprogramm V ist dazu eingerichtet, mehrere Anwendungsprogramme A4,A5 derart aufzunehmen, dass diese gleichzeitig in ihm ablaufen können.

Das Virtualisierungsprogramm V erhält eine eigene Benutzeridentität (UID), unter der es in dem Betriebssystem 2 abläuft und der nahezu sämtliche Zugriffsrechte oder nur lediglich geringfügig eingeschränkte Zugriffsrechte auf das Betriebssystem 2 zugeordnet sind.
Sämtliche Kommunikation des Virtualisierungsprogramms V mit dem Betriebssystem 2 findet unter der Benutzeridentität des Virtualisierungsprogramms V statt. Den Anwendungsprogrammen A4,A5 zugeordnete Benutzeridentitäten dagegen bleiben dem Betriebssystem 2 unbekannt, sodass sämtliche Kommunikation der Anwendungsprogramme A4,A5 gegenüber dem Betriebssystem 2 als Kommunikation des Virtualisierungsprogramms V erscheint.

Das Virtualisierungsprogramm V schafft für jedes der Anwendungsprogramme eine Umgebungseinrichtung 7,8, die für jedes der Anwendungsprogramme A4,A5 einen der oben genannten, Im Betriebssystem "Android" 2 bereitgestellten, isolierten Prozesse bildet, in dem das jeweilige Anwendungsprogramm A4,A5 ablaufen kann.

Ferner umfasst das Virtualisierungsprogramm V eine Regelungseinrichtung 13, über die die Umgebungseinrichtung 7 mit dem Kernel 3 kommuniziert und die dazu vorgesehen ist, die Kommunikation zwischen den Anwendungsprogramm A4,A5 und dem Kernel 3 zu prüfen, und abhängig von einem Ergebnis der Prüfung die Kommunikation weiterzuleiten oder zu blockieren.

Zur Benutzung der Anwendungsprogramme A4,A5 veranlasst das Virtualisierungsprogramm V die Bereitstellung der jeweiligen Umgebungseinrichtung 7,8 und stellt Einrichtungen 9,10,11,12 zur Leitung der Kommunikation der Anwendungsprogramme A4,A5 mit dem Kernel 3 bereit.
Die jeweilige Leitungseinrichtung 9,11 ist dazu vorgesehen, über die genannte Einrichtung zur IPC ablaufende Kommunikation zwischen den Anwendungsprogrammen A4,A5 und dem Verbindungsmodul 5 bzw. der Middleware 6 zu verändern derart, dass sie über die Regelungseinrichtung 10 durchgeführt wird. Dazu werden Referenzen im Speicher des jeweiligen Anwendungsprogramms A4,A5 die auf Komponenten des Betriebssystems 2 gerichtet sind, derart verändert, dass sie sich auf die Regelungseinrichtung 10 richten, wobei z.B. Handles zur Kommunikation mit dem Verbindungsmodul 5 überschrieben werden.
Mittels der Leitungseinrichtung 10,12 lassen sich die Systemaufrufe (Syscalls) der Anwendungsprogramme A4,A5 auf die Regelungseinrichtung 13 leiten. Dazu werden Programmcode-Adressen in einem dem Anwendungsprogramm A4,A5 zugewiesenen Speicher geändert und dadurch anstatt der an sich durch den jeweiligen Systemaufruf zum Abruf vorgesehenen Funktion des Betriebssystems 2 eine Funktion der Regelungseinrichtung 13 aufgerufen. Die Regelungseinrichtung 13 prüft den Systemaufruf und gibt ihn, sofern er zugelassen ist, an das Betriebssystem 2 weiter.

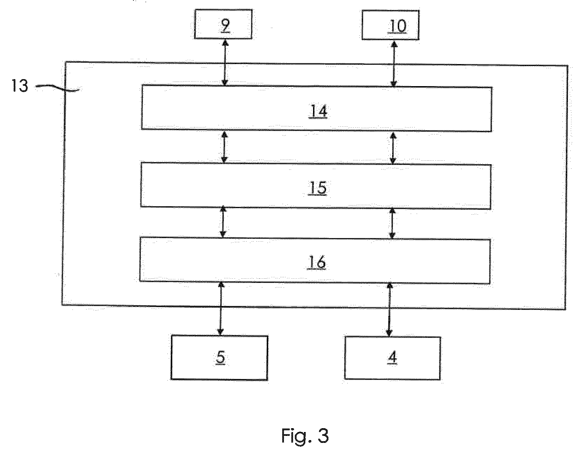

Wie Fig. 3 zu entnehmen ist, weist die Regelungseinrichtung 13 drei Schichten 14,15,16 auf. Die Schicht 14 ist dazu vorgesehen, die Kommunikation von der Umgebungseinrichtung 7,8, d.h. die Systemaufrufe und die an die Middleware 6, gerichtete Kommunikation zu empfangen sowie vom Betriebssystem 2 ausgehende Kommunikation zur Umgebungseinrichtung 7,8 zu senden.
In der Schicht 15 wird die Kommunikation geprüft, wobei die Kommunikation, sofern sie zulässig ist, an die Schicht 14 zur weiteren Verarbeitung durch eines der Anwendungsprogramme A4,A5 oder an die Schicht 16 zur weiteren Verarbeitung durch das Betriebssystem 2 weitergegeben wird.
Ferner erzeugt die Schicht 15 bei nicht zulässiger Kommunikation, die durch die Regelungseinrichtung 13 zu blockieren ist, eine zu der blockierten Kommunikation passende Antwort, damit das Anwendungsprogramm A4,A5 unter Verarbeitung der Antwort weiter ausgeführt werden kann.
Ferner ist die Schicht 15 dazu eingerichtet, Anfragen eines der Anwendungsprogramme A4,A5, die das jeweils andere Anwendungsprogramm A4,A5 betreffen, selbständig zu handhaben. Da dem Betriebssystem 2 die Anwendungsprogramme A4,A5 nicht bekannt sind, kann es die entsprechende Kommunikation nicht bearbeiten. Die Schicht 15 erkennt solche Kommunikation und übernimmt zu ihrer Verarbeitung die Funktionen, die das Betriebssystem 2 normalerweise erfüllen würde und bildet Verknüpfungen, die für die Kommunikation notwendig sind.

Die Schicht 16 ist dazu vorgesehen, die vom Betriebssystem 2 ausgehende Kommunikation zu empfangen und dem jeweiligen Anwendungsprogramm A4,A5, das sie betrifft, zuzuordnen und an die Schicht 15 weiterzugeben, und die von dem Anwendungsprogramm A4,A5 ausgehende Kommunikation derart zu modifizieren, dass sie gegenüber dem Betriebssystem 2 als Kommunikation des Virtualisierungsprogramms V erscheint.

Nachfolgend wird die Funktionsweise des Virtualisierungsprogramms konkret anhand eines Instant-Messenger-Anwendungsprogramms mit Bezugnahme auf die Fig. 2 beschrieben.
Das Instant-Messenger-Anwendungsprogramm ist durch das Anwendungsprogramm A4 gebildet, das unter dem Virtualisierungsprogramm V abläuft. Ferner läuft unter dem Virtualisierungsprogramm V als das Anwendungsprogramm A5 ein Kontaktdatenprogramm ab.
Ferner sind in den genannten getrennten Bereichen als das Anwendungsprogramm A1 ein Browser und als das Anwendungsprogramm A2 ein ursprünglich mit dem Betriebssystem 2 vorinstalliertes Kontaktdatenprogramm installiert.
Das Instant-Messenger-Anwendungsprogramm A4 ist dazu vorgesehen, über das Internet Nachrichten an Dritte, die ebenfalls das Instant-Messenger-Anwendungsprogramm A4 benutzen, zu versenden und einen aktuellen Standort des Computers 1, auf dem das Instant-Messenger-Anwendungsprogramm A4 abläuft, mitzuteilen. Ferner können über das Instant-Messenger-Anwendungsprogramm A4 empfangene Internetlinks direkt aus dem Instant-Messenger-Anwendungsprogramm A4 heraus in dem Browser A1 geöffnet werden. Ferner ist das Instant-Messenger-Anwendungsprogramm A4 dazu vorgesehen, auf die ursprünglich installierte Kontaktdatenbank A2 zuzugreifen.

Unmittelbar nach Installation des Instant-Messenger-Programms A4 unter dem Virtualisierungsprogramm V ist die Regelungseinrichtung 13 derart voreingestellt, dass sämtliche Kommunikation und Systemaufrufe des Instant-Messenger-Programms A4 blockiert sind. Ein Benutzer des Computers 1 nimmt über eine GUI des Virtualisierungsprogramms V Einstellungen vor, gemäß derer ein Internetzugriff sowie ein Zugriff auf den Browser A1 zulässig ist. Blockiert bleiben dagegen ein Zugriff auf den aktuellen Standort des Computers 1 sowie der Zugriff auf die vorinstallierte Kontaktdatenprogramm A2.
Um auf das Internet zuzugreifen und Nachrichten an Dritte versenden zu können, versendet das Instant-Messenger-Anwendungsprogramm A4 einen Systemaufruf, der von der Regelungseinrichtung 13 an dem Kernel 3 und die Einrichtung 4 zur Durchführung von Systemaufrufen weitergegeben wird, sodass ein Network Socket aufgebaut werden kann, den das Instant-Messenger-Anwendungsprogramm A4 zur Kommunikation über das Internet benutzt.
Wird mittels des Instant-Messenger-Anwendungsprogramms A4 ein Internetlink empfangen, leitet die Regelungseinrichtung 13 die entsprechende Kommunikation über das Verbindungsmodul 5 des Kernels 3 zur Middleware 6 und von dort zu dem Browser A1, in dem daraufhin die unter dem Internetlink aufrufbare Webseite geöffnet wird.
Versucht das Instant-Messenger-Anwendungsprogramm A4 auf den aktuellen Standort des Computers 1 zuzugreifen, blockiert die Regelungseinrichtung 13 den entsprechenden Systemaufruf und gibt einen zuvor festgelegten oder einen zufällig ausgewählten Standort an das Instant-Messenger-Anwendungsprogramm A4 zurück.

Sofern das Instant-Messenger-Anwendungsprogramm A4 versucht, auf das Kontaktdatenprogramm A2 zuzugreifen, leitet die Regelungseinrichtung 13 die entsprechende Kommunikation auf das unter dem Virtualisierungsprogramm V ablaufende Kontaktdatenprogramm A5 um.
Bei dem Kontaktdatenprogramm A5 kann es sich um dasselbe Anwendungsprogramm handeln wie das unter dem Betriebssystem 2 vorinstallierte Kontaktdatenprogramm A2. Ein Unterschied besteht dann lediglich darin, dass das Kontaktdatenprogramm unter dem Virtualisierungsprogramm V oder dem Betriebssystem 2 ausgeführt und auf unterschiedliche Datenbanken zugreifen kann. Möglich ist, dass das Kontaktdatenprogramm A2 unter dem Betriebssystem 2 das Kontaktdatenprogramm A5 unter dem Virtualisierungsprogramm V gleichzeitig ausgeführt werden. Vorstellbar ist allerdings auch, dass sich das Kontaktdatenprogramm A5 von dem Kontaktdatenprogramm A2 unterscheidet.

## Patentansprüche

1. Verfahren zur Bildung einer virtuellen Umgebung in einem Betriebssystem (2) eines Computers (1), insbesondere in dem Betriebssystem "Android", wobei das Betriebssystem (2) dazu vorgesehen ist, für jede unter dem Betriebssystem (2) ausgeführte Anwendungssoftware (A1,A2,A3) einen abgetrennten Bereich anzulegen, der von den jeweiligen Bereichen für andere Anwendungssoftware (A1,A2,A3) isoliert ist,
**dadurch gekennzeichnet,**
**dass** die virtuelle Umgebung durch ein Virtualisierungsprogramm (V) gebildet wird, das in einem der abgetrennten Bereiche des Betriebssystems (2) ausgeführt wird, und in dem Virtualisierungsprogramm (V) ein Anwendungsprogramm (A4,A5) teilweise oder vollständig isoliert von dem Betriebssystem (2) ausgeführt wird.

2. Verfahren nach Anspruch 1,
**dadurch gekennzeichnet,**
**dass** in dem Virtualisierungsprogramm (V) gleichzeitig unterschiedliche Anwendungsprogramme (A4,A5) ablaufen.

3. Verfahren nach Anspruch 1 oder 2,
**dadurch gekennzeichnet,**
**dass** das Virtualisierungsprogramm (V) Kommunikation zwischen dem Anwendungsprogramm (A4,A5) und dem Betriebssystem (2) überwacht und regelt, vorzugsweise zulässt oder blockiert.

4. Verfahren nach einem der Ansprüche 1 bis 3,
**dadurch gekennzeichnet,**
**dass** das Virtualisierungsprogramm (V) für jedes in ihm ablaufende Anwendungsprogramm (A4,A5) eine Umgebungseinrichtung (7,8), unter der das Anwendungsprogramm ausgeführt wird, und eine Regelungseinrichtung (13), die die Kommunikation, insbesondere einen Eingabe/Ausgabe-Betrieb, des in der Umgebungseinrichtung (7,8) ablaufenden Anwendungsprogramms (A4,A5) überwacht und regelt, bildet.

5. Verfahren nach Anspruch 4,
**dadurch gekennzeichnet,**
**dass** die Umgebungseinrichtung (7,8) zum Empfangen und zum Weiterleiten eines Systemaufrufs (Syscall) und/oder von Kommunikation zwischen dem Anwendungsprogramm (A4,A5) und dem Betriebssystem (2), insbesondere einer Middleware (6) des Betriebssystems (2), vorgesehen ist.

6. Verfahren nach Anspruch 4 oder 5,
**dadurch gekennzeichnet,**
**dass** die Regelungseinrichtung (13) die Kommunikation für unterschiedliche Funktionen des Anwendungsprogramms (A4,A5) separat regelt, wobei die Funktionen, vorzugsweise einzeln und/oder in Gruppen, ausgewählt werden.

7. Verfahren nach einem der Ansprüche 4 bis 6,
**dadurch gekennzeichnet,**
**dass** bei Ausführung mehrere der Anwendungsprogramme (A4,A5) die Regelungseinrichtung (13) die Kommunikation für jedes der Ausführungsprogramme separat regelt.

8. Verfahren einem der Ansprüche 4 bis 7,
**dadurch gekennzeichnet,**
**dass** der Regelungseinrichtung (13) die von der Umgebungseinrichtung (7,8) ausgehende Kommunikation verändert derart, dass sie gegenüber dem Betriebssystem (2) als Kommunikation des Virtualisierungsprogramms (V) erscheint, und vom Betriebssystem (2) ausgehende Kommunikation derart verändert, dass sie dem jeweiligen Anwendungsprogramm (A4,A5), das sie betrifft, zugeordnet werden kann.

9. Verfahren nach einem der Ansprüche 4 bis 8,
**dadurch gekennzeichnet,**
**dass** die Regelungseinrichtung (13) dazu eingerichtet ist, Kommunikation, die sich an unter dem Virtualisierungsprogramm ablaufende weitere Anwendungsprogramme (A4,A5) richtet, ohne Zugriff auf das Betriebssystem zu verarbeiten.

10. Computerprogrammprodukt, das direkt in der internen Speicher eines digitalen Computers geladen werden kann und Softwareabschnitte umfasst, mit denen die Verfahrensschritte gemäß einem der Ansprüche 1 bis 9 ausgeführt werden, wenn das Computerprogrammprodukt auf einem Computer läuft.

11. Vorrichtung zur Datenverarbeitung, umfassend Mittel zur Ausführung des Virtualisierungsverfahrens nach einem der Ansprüche 1 bis 9.
